(19)

Europäisches Patentamt
European Patent Office
Office européen des brevets

(11) **EP 1 852 751 A1**

(12) **EUROPEAN PATENT APPLICATION**
published in accordance with Art. 158(3) EPC

(43) Date of publication:
**07.11.2007 Bulletin 2007/45**

(21) Application number: **06714118.4**

(22) Date of filing: **20.02.2006**

(51) Int Cl.:
*G03G 15/20* (2006.01)    *B29C 39/10* (2006.01)
*B32B 1/08* (2006.01)    *B32B 27/34* (2006.01)
*C08J 5/00* (2006.01)    *C08L 27/12* (2006.01)
*C08L 79/08* (2006.01)

(86) International application number:
**PCT/JP2006/302978**

(87) International publication number:
**WO 2006/088189 (24.08.2006 Gazette 2006/34)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **21.02.2005 JP 2005044426**

(71) Applicant: **I.S.T. Corporation**
**Otsu-shi,**
**Shiga 520-2153 (JP)**

(72) Inventors:
 • **YAMADA, Hiroshi**
  **c/o I.S.T. Corp.**
  **Shiga 520-2153 (JP)**
 • **AOYAMA, Chisaka**
  **c/o I.S.T. Corp.**
  **Shiga 520-2153 (JP)**

 • **SANDAIJI, Takanobu**
  **c/o I.S.T. Corp.**
  **Shiga 520-2153 (JP)**
 • **FUJIWARA, Kae**
  **c/o I.S.T. Corp.**
  **Shiga 520-2153 (JP)**
 • **HIOKI, Kenji**
  **c/o I.S.T. Corp.**
  **Shiga 520-2153 (JP)**

(74) Representative: **Neath, Susannah Mairi**
 **Frank B. Dehn & Co.**
 **St Bride's House**
 **10 Salisbury Square**
 **London EC4Y 8JD (GB)**

(54) **TUBING AND PROCESS FOR PRODUCTION THEREOF**

(57)     A tubular article (31) is provided by molding and thermosetting a mixture including polyimide and fluororesin particles. At least a part of the fluororesin particles present in the vicinity of a surface layer of the tubular article (31) is melt-flowed into the outer face or both faces of the tubular article and oozes out so as to form a fluororesin coating partially or entirely. The tubular article (31) can be manufactured by applying on the outer face of a mold a dispersion prepared by adding fluororesin particles to a polyimide precursor solution and casting to have a predetermined thickness, heating for imidization so that the maximum temperature for the imidization is set higher than the melting point of the fluororesin, cooling and subsequently separating the tubular article from the mold. The present invention provides a tubular article with low dynamic friction coefficient particularly for the outer face, with high durability and that can be manufactured at low cost, and a method of manufacturing the tubular article.

FIG. 6

**Description**

Technical Field

The present invention relates to a tubular article made of a heat-resistant resin for thermally fixing an unfixed toner image in an image formation apparatus such as a copying machine, a printer and a facsimile that uses electrophotography. More specifically, the present invention relates to a tubular article whose inner and outer faces have low dynamic friction coefficients and that has high durability, and a method of manufacturing the same.

Background Art

Polyimide resin is excellent in various properties such as a heat resistance, dimensional stability, mechanical characteristics, electrical characteristics and the like, and it has been used in various fields such as application to electronic-electric equipment and insulating materials, and also in the field of aerospace. For example, in an electrophotographic image formation apparatus, the polyimide resin has been used for many members in electrophotographic processes such as charging, sensitizing, intermediate transfer, and fixing.

Here, the polyimide tubular article used as a fixing member of the image formation apparatus will be described below with reference to some examples. In an image formation apparatus such as a copying machine and a laser beam printer, in the final stage of printing or copying, a toner image on a sheet-like transfer material such as paper is melted with heat and fixed on the transfer material.

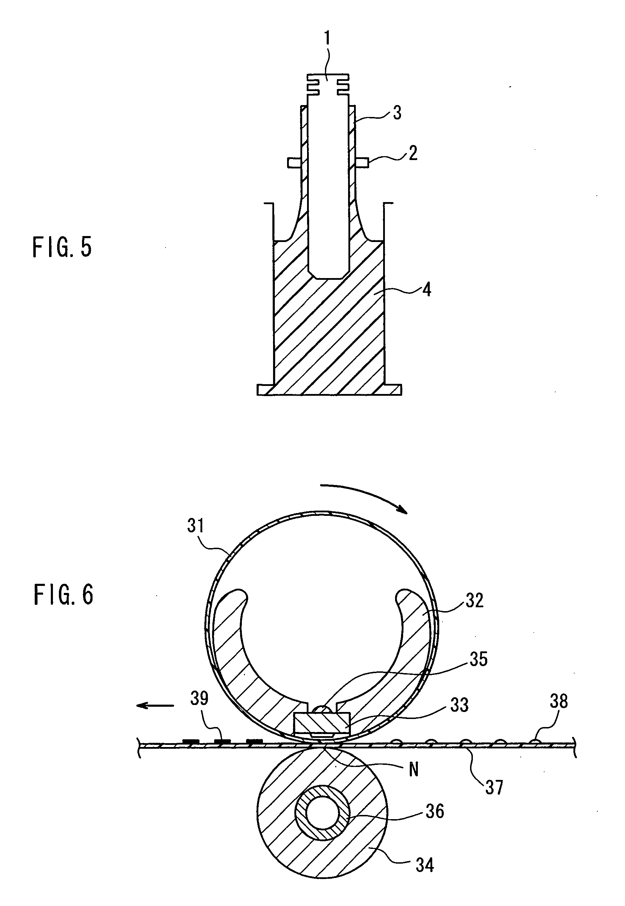

One example of the application of a polyimide resin tubular article as a fixing belt of an image formation apparatus is a belt fixing method as disclosed in Patent documents 1-3, and it is used as a fixing belt for thermally fixing a toner image formed on a copying paper as shown in FIG. 6. In this application, a belt guide 32 and a ceramic heater 33 are provided inside a fixing belt 31 (polyimide resin tubular article). A toner 38 is melted with heat on a copying paper 37, while the copying paper 37 having the toner image formed thereon is sent between the heater and a pressure roller 34 having a press-contact drive power source in a certain order so as to fix the toner image on the copying paper. In the belt fixing method, the heater heats the toner in a substantially direct manner via a polyimide tubular article (fixing belt) having an extremely thin film-like coating. Therefore, the temperature of the heating part will reach a predetermined fixing temperature instantly and thus a waiting time from a power-on operation to a state to allow fixing is not required. In addition to that, the power consumption can be reduced.

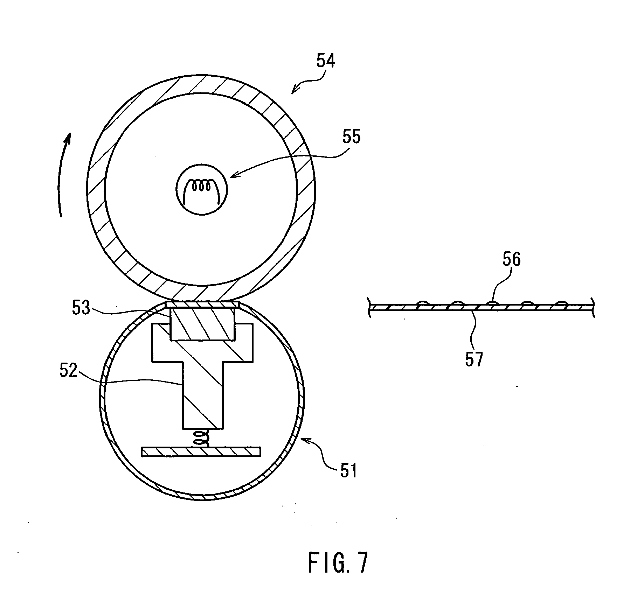

Patent document 4 proposes an example of using a polyimide tubular article as a pressure belt for a fixing device in a full-color image formation apparatus. As shown in FIG. 7, the fixing device includes a rotatable fixing roller 54 having a drive power source with a heat source 55, a pressure belt 51 (polyimide resin tubular article) press-contacted on this roller, a press pad 53 disposed inside this pressure belt, and a press guide 52. In this example, the pressure belt is pressed on the surface of the fixing roller and rotated with the driving force of the fixing roller. A copying paper 57 on which a toner image is formed is sent serially into the narrow contact part so as to thermally fix the toner image 56 on the surface of the fixing roller. The polyimide resin tubular article used in this application can be obtained generally by forming a tubular article from a polyimide precursor solution obtained by reacting tetracarboxylic acid dehydrate and diamine in a polar polymerization solvent, and subjecting to imidization.

For manufacturing a tubular article from the polyimide precursor solution, a method as known from the Patent documents 5 and 6 includes: applying a polyimide precursor solution on the outer face or inner face of a mold so as to have a predetermined thickness and completing imidization with heat or chemically, and separating the article from the mold.

The above-described fixing belt or pressure belt in use is a belt having a two-layered structure prepared by forming a release layer of fluororesin or the like on an outer face (a face to be contacted with a toner) of a polyimide tubular article, or a belt having a three-layered structure having further a primer layer for improving the adhesiveness between the polyimide tubular article and the fluororesin layer.

In order to meet the recent requirement for smaller OA equipment that operates at higher speed, a fixing belt or a pressure belt is required to have not only a releasing property for the outer face of the belt but properties such as a low dynamic friction coefficient or a high thermal conductivity for the inner face.

That is, each of the fixing belt in FIG. 6 and the pressure belt in FIG. 7 is configured to be driven and rotated by a pressure roller or a fixing roller having a drive power source. In such a configuration, in a case where the roller having a drive power source and a belt are in direct contact with each other, the rotational force of the driving roller is conveyed directly to the belt, and thus the belt rotates comparatively smoothly. However, when a copying paper is inserted between the driving roller and the belt so as to fix the toner substantially, the rotational force for the belt is conveyed to the belt through the transfer paper. As a result, slipping may occur easily between the surfaces of the transfer paper and the belt.

Particularly, since a release layer of a fluororesin or the like is laminated on the outermost layer of the fixing belt or the pressure belt so as to prevent adhesion of a molten toner (an offset phenomenon), the dynamic friction coefficient is low and they are slippery. Slipping may occur more often when the copying machine and the printer are driven at high speed. As mentioned above, when slipping occurs on the fixing face (nip part), due to repeated slight slipping between the copying paper and the belt surface, the release layer on the belt surface will be abraded by the copying paper. This causes fuzz and roughens the surface of the release layer, resulting in an offset.

Moreover, both the polyimide resin and the fluororesin laminated on the outer face have inherently low thermal conductivities, and they have multilayered structures. Therefore, the thermal conductivity for corresponding to the high-speed tendency is insufficient.

For example, Patent documents 7-9 propose measures for satisfying these requirements. Patent document 7 relates to roughening the inner surface of a polyimide tubular article so as to hold a lubricant. According to Patent document 8, a thermo-conductive inorganic filler and a fluororesin powder such as polytetrafluoroethylene are added to a polyimide precursor, which is heated at 250°C, and subsequently a fluororesin is coated on the outer surface. According to Patent document 9, a polyimide precursor containing a fluororesin powder is applied and expanded on the internal peripheral surface of a cylindrical mold, which is heated for curing.

However, the Patent documents 7-9 proposing conventional technology aim to lower the frictional resistance of the inner face of the tubular article. Concerning the outermost face to be contacted with paper, the conventional release layer of a fluororesin layer is used without any substantial modification or improvement. Moreover, when it has a two-layered structure having a polyimide tubular article and a fluororesin release layer or a three-layered structure having a primer layer between the polyimide layer and the fluororesin layer, and especially when used in a fixing device as shown in FIG. 6, the thickness is increased due to the multilayered structure and the thermal conductivity is lowered. Moreover, the manufacturing process will be complicated since three kinds of materials and three different kinds of processes will be required. In addition, adhesion between the layers formed of the respective materials is not satisfactory.

Patent document 1: JP H07-178741 A
Patent document 2: JP H03-25471 A
Patent document 3: JP H06-258969 A
Patent document 4: JP H11-133776 A
Patent document 5: JP H06-23770 A
Patent document 6: JP H01-156017 A
Patent document 7: JP 2001-341143 A
Patent document 8: JP 2001-040102 A
Patent document 9: JP 2001-056615 A

Disclosure of Invention

Therefore, with the foregoing in mind, it is an object of the present invention to provide a tubular article that solves the above-mentioned problems of conventional techniques, the inner face has a low frictional resistance and at the same time the outer face has a sufficient releasing property and high durability to be applied as a fixing belt or a pressure belt, which can be manufactured at low cost. The present invention provides also a method of manufacturing the tubular article.

The tubular article of the present invention is formed by molding and setting with heat a mixture including polyimide and fluororesin particles. At least a part of the fluororesin particles present in the vicinity of the surface layer of the tubular article is melt-flowed on the outer face or both faces of the tubular article and oozes out so as to form a fluororesin coating partially or entirely.

A method of manufacturing a tubular article of the present invention includes steps of: applying, on an outer face of a mold, a dispersion of a polyimide precursor solution and melt-flowed fluororesin particles and casting; heating for imidization and setting the maximum temperature in the imidization to be higher than the melting point of the fluororesin; after cooling, separating the tubular article from the mold so that at least a part of the fluororesin particles present in the vicinity of the surface layer of the tubular article is melt-flowed into the outer face or the both faces of the tubular article and oozes out so as to form a fluororesin coating partially or entirely.

Brief Description of Drawings

[FIG. 1] FIG. 1 is a schematic cross-sectional view showing a tubular article before completion of imidization in one example of the present invention.
[FIG. 2] FIG. 2 is a schematic cross-sectional view showing a tubular article after completion of imidization in one example of the present invention.

[FIG. 3] FIG. 3 is a schematic cross-sectional view showing formation of a coating in a case of FEP addition in one example of the present invention.

[FIG. 4] FIG. 4 is a schematic cross-sectional view showing a comparison in formation for a case where FEP is mixed and a case where PTFE is mixed in one example of the present invention.

[FIG. 5] FIG. 5 is a cross-sectional view showing a process of casting in one example of the present invention.

[FIG. 6] FIG. 6 is a schematic cross-sectional view showing a fixing device of a laser beam printer used in one example of the present invention.

[FIG. 7] FIG. 7 is a schematic cross-sectional view showing a fixing device of a laser beam printer used in another example of the present invention.

[FIG. 8] FIG. 8 is a cross-sectional view showing a process of casting in another example of the present invention.

[FIG. 9] FIG. 9 is a microphotograph of an outer surface of a polyimide tubular article in Example 1 of the present invention.

[FIG. 10] FIG. 10 is a microphotograph of an inner surface of a polyimide tubular article in Example 1 of the present invention.

[FIG. 11] FIG. 11 is a microphotograph of an outer surface of a polyimide tubular article in Example 5 of the present invention.

[FIG. 12] FIG. 12 is a schematic cross-sectional view showing an instrument for measuring dynamic friction coefficient used in one example of the present invention.

Description of the Invention

A tubular article of the present invention is based on polyimide and fluororesin particles. The polyimide and the fluororesin particles are not compatible with each other. The fluororesin is melted and oozes out on the outer face or the both faces of the polyimide tubular article, and the molten-oozing fluororesin forms a fluid coating thereon.

When the polyimide precursor solution that contains fluororesin particles and that is cast on the outer face of the mold is heated for imidization, the maximum temperature for the imidization is set to a temperature higher than the melting point of the fluororesin. Thereby, the fluororesin particles will be melted and oozing out at least on the outer face of the polyimide so as to provide a polyimide tubular article that has an inner face with a low friction coefficient and an outer face with a high releasing property.

It is preferable that the fluororesin coating face has a granular pattern due to the fluororesin particles. Since a part of the fluororesin particles remains, the surface seems to have fine bubbles according to observation.

It is preferable that the fluororesin particles are of at least one fluororesin selected from the group consisting of polytetrafluoroethylene (PTFE), tetrafluoroethene-perfluoroalkyl vinyl ether copolymer (PFA), polychloro-trifluoroethylene (PCTFE), tetrafluoroethylene-hexafluoropropylene copolymer (FEP), and tetrafluoroethylene-ethylene copolymer (PETFE).

Thermoplastic fluororesins such as PFA and FEP are used preferably for flowing thermally the fluororesin oozing out on the surface of the tubular article and for forming a fluororesin coating. Such a fluororesin flows at a temperature of the melting point or higher and can be formed as a film-like coating on the inner and outer faces of the tubular article.

The PTFE resin is a fluororesin that has a high melt viscosity and thus it will not be flowed easily even when heated at its melting point or higher. When such a fluororesin is mixed, the inner and outer surfaces of the tubular article forms a so-called sea-island structure where the polyimide is the sea and the fluororesin particles exist like islands. This structure is optimally used for an intermediate transfer belt or the like used in an image formation apparatus. Namely, the transfer belt is used for transferring a toner image from a photoreceptor intermediately and re-transferring the toner image onto a copying paper subsequently. When a toner powder slightly remaining on the transfer belt surface after the re-transferring onto the copying paper is scraped and removed with a blade, a sliding resistance with the blade can be suppressed preferably.

The polyimide used in the present invention is a thermosetting resin. A dispersion of a polyimide precursor solution and a fluororesin is cast for example on either outer or inner face of a mold, dried and heated to complete imidization so as to manufacture a polyimide-fluororesin composite tubular article having fluororesin oozing out on the outer face or on both faces of the tubular article.

Regarding the tubular article manufactured by the method, the fluororesin will be melted and ooze out easily on a face where the coating is in contact with the air. Namely, the fluororesin powder in the polyimide precursor solution is mixed and dispersed. However, by applying heat to a temperature higher than the melting point of the fluororesin in the course of proceeding the imidization, the molten fluororesin can move in the thickness direction of the tubular article toward the outermost layer in contact with the air.

The details of the mechanism of the phenomenon that the fluororesin moves in the tubular article have not been known. However, as a result of numerous experiments and continuous studies, the inventors have found that in the manufacturing of a polyimide fluororesin composite film where the dispersion of the polyimide precursor solution and the fluororesin is expanded and cast on a glass plate, dried and heated to complete the imidization, the fluororesin is melted and oozes out also on a face where the film is in contact with the glass. And the inventors carried out an experiment for confirmation with respect to the tubular article of the present invention.

As a result, it has been found that a fluororesin can ooze out also on the inner face of the tubular article that is not contacted with the air layer at all. It has been found further that the phenomenon of the oozing of the fluororesin on both faces of the tubular article would be varied depending on a difference in fluororesin types and a difference in the temperature for the imidization process.

That is, the phenomenon of the oozing of a fluororesin is affected by the melting point of the fluororesin and the imidization temperature of the polyimide precursor. According to the detailed experimental results, when a fluororesin was mixed in a rigid polyimide using biphenyl tetracarboxylic acid dehydrate (BPDA) as aromatic tetracarboxylic acid dehydrate and para-phenylenediamine (PPD) as aromatic diamine, the fluororesin did not appear prominently on either face of the tubular article if the highest temperature for imidization is lower than the melting point of the fluororesin. However, when the temperature was increased to the melting point or higher of the fluororesin, the fluororesin was melted and oozed out on both faces of the inner and outer faces of the tubular article, whereby a tubular article with a low friction resistance was obtained.

The inventors found also that it was preferable for melting and oozing of the fluororesin, that the polyimide obtained by subjecting the polyimide precursor solution comprising aromatic tetracarboxylic acid dehydrate and aromatic diamine to imidization has a greater heat shrinkage rate. Namely, the polyimide precursor solution is cast on a glass plate and dried, then heated gradually to 300°C for carrying out imidization. After cooling, the thus formed polyimide film is peeled off from the glass plate and further heated from 300°C to a temperature not lower than the melting point of the fluororesins, for example 400°C, and the fluororesin will be melted and oozes out easily in polyimide having a greater heat shrinkage rate.

The test result indicates that the film obtained from the polyimide precursor comprising BPDA as an aromatic tetracarboxylic acid dehydrate ingredient and PPD as an aromatic diamine ingredient had a heat shrinkage rate of 0.9%, and the film obtained from the polyimide precursor using PMDA and ODA had a heat shrinkage rate of 0.09%. The heat shrinkage rate of the polyimide film and the phenomenon that the fluororesin is melted and oozing out has a certain relationship. That is, as the heat shrinkage rate in the range of 300°C to 400°C is larger, the fluororesin will ooze out from the polyimide coating more readily.

A method for testing the heat shrinkage rate will be described below in detail. "TMA-50" produced by Shimadzu Corporation was used for measurement of the heat shrinkage rate. The polyimide film was manufactured by: expanding a polyimide precursor solution of the monomer on a glass plate so that it would have a thickness of 50 $\mu$m when the imidization is completed; drying at a temperature of 150°C for 40 minutes; and heating at 200°C for 40 minutes, at 250°C for 20 minutes and at 300°C for 20 minutes.

This film was cut into strips each having a length of 10 mm and a width of 3.5 mm. Each strip was applied with a load of 2.0 g at one end and attached to the "TMA-50". The heat shrinkage condition was observed from the room temperature to 400°C, at a temperature-rise rate of 10°C/min. so as to calculate the heat shrinkage rate in the temperature range of 300°C to 400°C.

In an experimental result for a polyimide precursor solution including FEP whose melting point (250°C) is lower than the melting point of PTFE (327°C), the fluororesin (FEP) oozed out on the inner and outer faces of the tubular article at the maximum temperature (300°C) for imidization. Furthermore, the surface flowed thermally to form a coating, thereby a tubular article having a low frictional resistance was obtained.

Accordingly, it is possible to ooze out the fluororesin on the inner and outer faces of the tubular article by selecting the temperatures such as the melting point of the fluororesin and imidization temperature of the polyimide precursor, and by setting certain conditions.

The tubular article of the present invention can be a single layer or it can include plural layers as required. In a case of a multilayer, the polyimide layer can be formed with an inner layer containing no or relatively small amount of fluororesin particles in comparison with the outer layer so as to further improve the mechanical characteristics of the tubular article. It is also possible to form the multilayer with layers varied in the types of the polyimide and fluororesin or varied in the content of the fluororesin. Alternatively, the polyimide precursor mixed with the fluororesin is cast on a mold, and subsequently the temperature at the imidization reaction is controlled to melt and ooze out the fluororesin on only the outer face of the tubular article. This is suitable for the use as an intermediate transfer belt or the like since preferable frictional property is required only for the surface of the outer layer.

It is possible to add a thermal conductive filler or the like to the fluororesin-mixed polyimide precursor solution, and examples of the thermal conductive filler include boron nitride, potassium titanate, mica, titanium oxide, talc, calcium carbonate, aluminum nitride, alumina, silicon carbide, silicon, silicon nitride, silica, graphite, carbon fiber, metal powder, beryllium oxide, magnesium, and magnesium oxide. Preferably, addition of such thermal conductive filler serves to improve the thermal conductivity of the tubular article coating so as to correspond to a high-speed fixing.

For the fluororesin in the present invention, fluororesins such as PTFE, PFA, FEP, CPTFE and the like can be used alone or mixed with each other in use. The PTFE, PFA and FEP have excellent heat resistance and releasing property, and they can be used preferably in the present invention. In the polyimide precursor solution mixed with the fluororesin, electroconductive materials such as carbon black, carbon fiber and metal powder and/or an antistatic agent can be included.

Preferably, use of a fluororesin where an electroconductive material or an antistatic agent is mixed and dispersed serves to avoid degradation of image quality or generation of image ghost caused by electrostatic offset occurring in the image formation process.

It is preferable that the content of the mixed fluororesin is set to 10 to 90 mass% with respect to the solids in the polyimide precursor solution. Most preferably, it is in a range of 20 to 80 mass%.

When the content of the fluororesin is less than 10 mass%, the amount of the molten-oozing fluororesin is decreased and the effect of reducing the frictional resistance will be degraded. When the content exceeds 90 mass%, the mechanical strength is degraded, the smoothness of the tubular article surface is degraded as well so that cracks are formed easily.

It is preferable that the fluororesin is powdery since it can be mixed easily, and the preferred average particle diameter is in a range of 0.1 to 100 $\mu$m. More preferable average particle diameter is in a range of 0.5 to 50 $\mu$m. Such a range is preferable because the particles can be dispersed uniformly with less flocculation of them.

If the average particle diameter is less than 0.1 $\mu$m, the particles tend to generate secondary flocculation. If it exceeds 100 $\mu$m, unevenness resulting from the fluororesin particles tends to occur at the inner face or the outer face of the tubular article. Thus, such a range is not preferable. Incidentally, the average particle diameter of the above-stated fluororesin powder can be measured using a laser diffraction particle size analyzer (ASLD-2100, produced by Shimadzu Corporation) or a laser scattering particle size distribution analyzer (LA-920, produced by Horiba Ltd.).

For adjusting the size of the fluororesin particles, it is preferable that before applying the dispersion of the polyimide precursor solution and the fluororesin particles on the outer face of the mold, the dispersion is sieved with a filter so as to remove coarse particles among the fluororesin particles.

The tubular article of the present invention is based on polyimide, and it is provided by mixing a fluororesin and a polyimide precursor solution, casting to have a seamless shape, and heating for imidization. The polyimide precursor solution can be obtained by reacting aromatic tetracarboxylic acid dehydrate and aromatic diamine in substantially the same amount in mol, in an organic polar solvent.

Typical examples of the aromatic tetracarboxylic acid dehydrate include 3,3',4,4'-benzophenone tetracarboxylic acid dehydrate, pyromellitic acid dehydrate, 2,3,3',4-biphenyl tetracarboxylic acid dehydrate, 3,3',4,4'-biphenyl tetracarboxylic acid dehydrate, 1,2,5,6-naphthalene tetracarboxylic acid dehydrate, 1,4,5,8-naphthalene tetracarboxylic acid dehydrate, 2,3,6,7-naphthalene tetracarboxylic acid dehydrate, 2,2'-bis(3,4-dicarboxyphenyl) propane dehydrate, perylene-3,4,9,10-tetracarboxylic acid dehydrate, bis(3,4-dicarboxyphenyl) ether dehydrate, bis(3,4-dicarboxyphenyl)sulfone dehydrate and the like.

Typical examples of the aromatic diamine include 4,4'-diaminodiphenyl ether, p-phenylenediamine, m-phenylenediamine, 1,5-diamino naphthalene, 3,3'-dichloro benzidine, 3,3'-diamino diphenylmethane, 4,4'-diamino diphenylmethane, 3,3'-dimethyl-4,4'-biphenyl diamine, 4,4'-diamino diphenylsulfide-3,3'-diamino diphenyl sulfone, benzidine, 3,3'-dimethyl benzidine, 4,4'-diamino phenyl sulfone, 4,4'-diamino diphenyl propane, m-xylylene diamine, hexamethylene diamine, diamino propyltetra methylene, 3-methyl heptamethylene diamine and the like.

These aromatic tetracarboxylic acid dehydrates and aromatic diamines may be used alone or in a combination of them. Further, the polyimide precursor solution therefor is completed, and these precursors may be mixed for use.

Among the combinations of the aromatic tetracarboxylic acid dehydrates and aromatic diamines, the combination of biphenyl tetracarboxylic acid dehydrate and para-phenylendiamin is preferred. In a polyimide obtained from the precursor, the polymer has a rigid structure so as to extrude easily the fluororesin outwards at the melting point of the fluororesin.

The organic polar solvent, in which the aromatic tetracarboxylic acid dehydrate and the aromatic diamine are allowed to react, includes, for example, N-methyl-2-pyrrolidone, N, N-dimethyl formamide, N, N-dimethyl acetamide, N, N-diethyl formamide, N, N-diethyl acetamide, dimethyl sulfoxide, hexamethylphosphor triamide, pyridine, dimethyl tetramethylene sulfone, tetramethylene sulfone and the like. These organic polar solvents may be mixed with phenol, xylene, hexane, toluene or the like.

The above-mentioned polyimide precursor solution can be obtained by allowing the aromatic tetracarboxylic acid dehydrate and the aromatic diamine to react in an organic polar solvent normally at 90°C or lower, and the solid content in the solvent may be 10 to 30 mass%, which can be set depending on the specifications of the finished polyimide resin tubular article and the processing conditions.

When the aromatic tetracarboxylic acid dehydrate and the aromatic diamine are allowed to react in the organic polar solvent, the viscosity of the solution may be increased depending on the polymerization conditions. However, this can be diluted to a predetermined viscosity before use. The solution usually is used at the viscosity of 1 to 5,000 poise depending on the manufacturing conditions and working conditions.

In the manufacturing method of the present invention, in order to achieve a temperature for allowing a fluororesin layer to ooze out on at least the outer face of the tubular article, heat should be applied to be at a temperature higher than the melting point of the fluororesin. The maximum temperature for the imidization preferably is a temperature higher than the melting point of the mixed fluororesin by 10°C or more, and at this temperature, the imidization preferably is completed.

A heating time required for oozing the fluororesin on the inner and outer faces of the medical tube preferably is within 30 minutes after the maximum temperature for the imidization reaches a temperature higher than the melting point of the fluororesin. If heating is conducted for 30 minutes or longer, there is a risk of the thermal decomposition of the fluororesin and the degradation of the mechanical characteristics of the polyimide.

The tubular article of the present invention can be obtained by the following method, for example. The surface of a mold with a predetermined outer diameter (corresponding to the inner diameter of the tubular article) is coated with a fluororesin mixed polyimide precursor solution, which is cast with a die on the outer side, and introduced into a furnace, where the polymerized solvent is dried at a relatively low temperature of 100 to 150°C. Later, the imidization reaction is advanced. Finally, it is heated for a predetermined time period at a temperature higher than the melting point of the fluororesin so as to complete the imidization. This is then cooled to detach the tubular article from the mold.

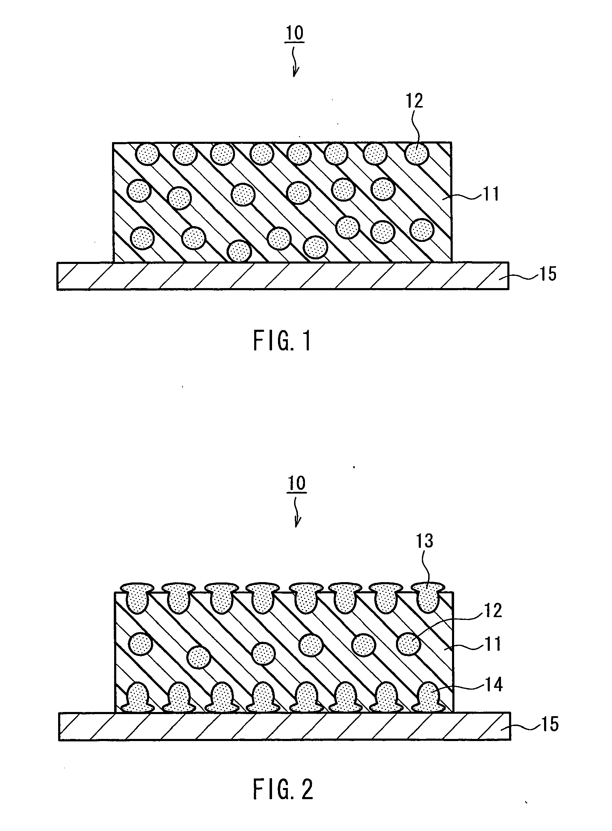

FIG. 1 shows a schematic enlarged cross-sectional view of a tubular article 10 that is formed according to one embodiment of the present invention, by mixing a fluororesin (PTFE) powder in a polyimide precursor solution and casting, and where the imidization temperature for the polyimide is 300°C. At/Before this stage, the fluororesin powder 12 is dispersed within the polyimide film layer 11 and the surface layer is covered substantially with a polyimide layer. At this stage, the contact angle of water is low. Numeral 15 denotes a mold.

Next, when the imidization temperature is raised to 400°C, as shown in FIG. 2, the fluororesin powder is melted and oozes out through the polyimide surface. Numeral 13 denotes the thus oozing fluororesin. Numeral 14 denotes a fluororesin that has been melted and oozing out on the inner surface side of the mold. At this stage, the contact angle of water becomes high. Since the fluororesin has no compatibility with the polyimide, it forms a sea-island structure ('sea' denotes polyimide and 'island' denotes fluororesin), and the molten fluororesin oozes out partially from the polyimide surface.

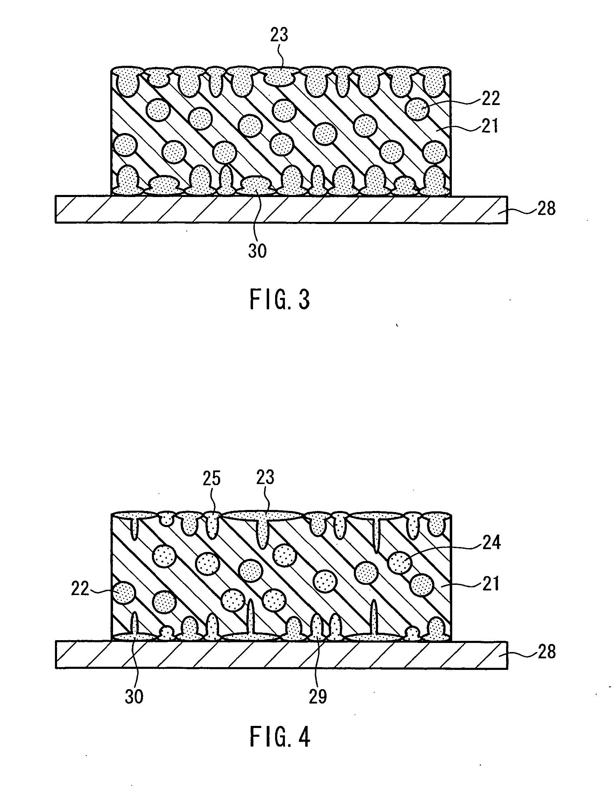

FIG. 3 is a schematic enlarged cross-sectional view showing a tubular article that is formed by mixing only FEP (melting point: 260°C) particles in the polyimide precursor solution, casting and setting the imidization temperature of the polyimide at 400°C. The FEP powder 22 is dispersed within the polyimide film layer 21, the FEP is melted and flows into the outer surface layer so as to ooze out, and thus forming a fluororesin coating 23 partially or entirely. Numeral 30 denotes FEP resin that has been melted and oozed out on the inner surface. Numeral 28 denotes a mold.

FIG. 4 is a schematic enlarged cross-sectional view showing a tubular article that is formed by mixing PTFE (melting point: 327°C) particles and FEP (melting point: 260°C) particles at a ratio of 50:50 in the polyimide precursor solution, casting and setting the imidization temperature of the polyimide at 400°C. The FEP powder 22 and the PTFE powder 24 are dispersed within the polyimide film layer 21. The FEP and PTFE are melted and flow to ooze out on the surface layer so as to form partial or entire fluororesin coatings (23, 25). Numeral 28 denotes a mold.

According to the present invention, at least a part of the fluororesin particles present in the vicinity of the surface layer of the tubular article is melted and oozes out on the outer face or both faces of the tubular article, and the molten-oozing fluororesin is integrated with the polyimide and forms a coating that flowed on the surface of the tubular article. Therefore, the dynamic friction coefficient of the inner face of the tubular article is low. Moreover, since the outer face of the tubular article also is formed with the fluororesin coating, the molten toner will be released easily. As a result, unlike the case of a conventional fixing belt, there is no need of molding a new fluororesin release layer in a separate step, but it can be applied to a fixing member, a transfer belt, an intermediate transfer-heating fixing belt or the like for an image formation apparatus. Further, a dispersion prepared by adding fluororesin particles to a polyimide precursor solution is applied to the outer face or the inner face of the mold, casting to a predetermined thickness, heating for imidization so as to make the maximum temperature of the imidization to a temperature higher than the melting point of the fluororesin, so that at least a part of the fluororesin particles present in the vicinity of the surface layer of the tubular article can be melted and ooze out on at least the outer face of the tubular article. A molded product having a fluororesin melted and oozing out on either or both faces of a polyimide base can be a film such as a heat-resistant sliding material or a releasing film. Alternatively, when it is formed as a tube, the product is provided with chemical stability and mechanical characteristics of polyimide, and it can be used suitably for a medical catheter and various intra-corporeal tubes for medical application.

Examples

Hereinafter, the present invention will be described more specifically with reference to Examples. The present invention will not be limited to the Examples below.

In Examples and Comparative Examples below, biphenyl tetracarboxylic acid dehydrate is abbreviated as "BPDA". Para-phenylenediamine is abbreviated as "PPD", pyromellitic acid dehydrate is abbreviated as "PMDA", 4,4'-diaminodiphenyl ether is abbreviated as "ODA" and N-methyl-2-pyrrolidone is abbreviated as "NMP".

A dynamic friction coefficient of a tubular article obtained by the present invention, and a contact angle of a film obtained from these materials with respect to pure water were measured by the following methods.

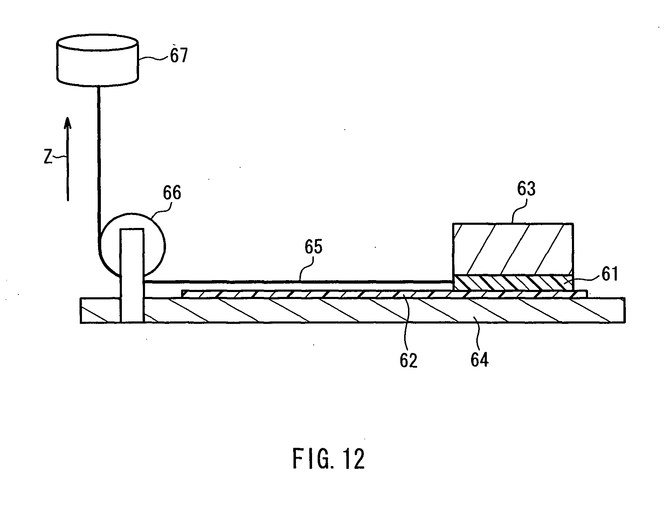

(1) Method for measuring dynamic friction coefficient (see FIG. 12)

The dynamic friction coefficient was measured in accordance with JISK7125. Specifically, a test film 62 having a width of 80 mm and a length of 200 mm was fixed on a horizontal table 64. Another test film 61, which was made of the same material as the test film 62 and had a width of 63 mm and a length of 63 mm (area: 40 cm$^2$) was laminated thereon, and further, a load 63 having a width of 63 mm and length of 63 mm (area: 40 cm$^2$) and having a weight of 200 g was placed thereon. The laminated test films were slid horizontally at a speed of 100 mm/min., and the load (dynamic friction force) was measured to calculate the dynamic friction coefficient through the equation below. Numeral 65 denotes a wire, 66 denotes a pulley, and 67 denotes a load cell of a tension tester. "Z" denotes a hoisting direction.

$$\text{Dynamic friction coefficient } \mu_D = F_D / F_P$$

$F_D$: dynamic friction force (N)
$F_P$: normal force generated due to mass of sliding piece (= 1.96 N)

(2) Measurement of contact angle

A contact angle with pure water at 23°C was measured using an instrument "FACE CA-Z" produced by Kyowa Interface Science Co., Ltd.

(Example 1)

(1) Manufacturing of fluororesin mixed polyimide precursor solution

39 mass parts of PPD was dissolved in NMP in a flask with respect to 100 mass parts of BPDA (monomer concentration: 18.2 mass%), which were allowed to react at a temperature of 23°C for 6 hours while stirring, whereby a polyimide precursor solution was obtained. The rotational viscosity of this polyimide precursor solution was 1200 poise. Herein, the rotational viscosity was a value measured using a Brookfield viscometer at a temperature of 23°C. Next, a PTFE powder with an average particle diameter of 3.0 $\mu$m (melting point: 327°C, produced by Dupont, "Zonyl MP1100" (Trade Name)) was added to the polyimide precursor solution so that the ratio became 20 mass% of the solid content in the polyimide precursor solution, and stirred. Further, a FEP powder with an average particle diameter of 35 $\mu$m (melting point : 260°C, produced by Dupont, "532-8110" (Trade Name)) was added to the polyimide precursor solution so that the ratio became 4.0 mass% of the solid contents in the polyimide precursor solution and stirred so as to disperse the powder uniformly. Subsequently, coarse foreign particles were filtered out using a stainless-steel wire netting of 250 mesh, whereby a fluororesin powder mixed polyimide precursor solution was prepared.

(2) Manufacturing of tubular article

On a surface of an aluminum mold having a outer diameter of 24 mm and a length of 500 mm, a silicon oxide coating agent was coated by a dipping method and baked so as to form a silicon oxide film coating.

Next, as shown in FIG. 5, a mold 1 was dipped in the polyimide precursor solution 4 mixed with the fluororesin powder, to the point 400 mm from the tip end. Subsequent to this application, a ring die 2 having an inner diameter of 25 mm was inserted from above the mold and run so as to form a cast film 3 having a thickness of 500 $\mu$m on the surface of the mold.

Later, the mold 1 with the film was placed in a furnace of 120°C and dried for 60 minutes. Subsequently, the temperature was raised to 200°C in 40 minutes, and the mold was held at the same temperature for 20 minutes. After heating for 10 minutes at 250°C for the final imidization, the temperature was raised to 400°C in 15 minutes, and the mold was heated for 10 minutes at the same temperature so as to complete the imidization. After cooling to room temperature (25°C), the tubular article was detached from the mold.

The thus obtained tubular article had a thickness of 55 $\mu$m, whose both end parts were cut apart so as to obtain a tubular article having a length of 240 mm (A4 size) and an inner diameter of 24 mm.

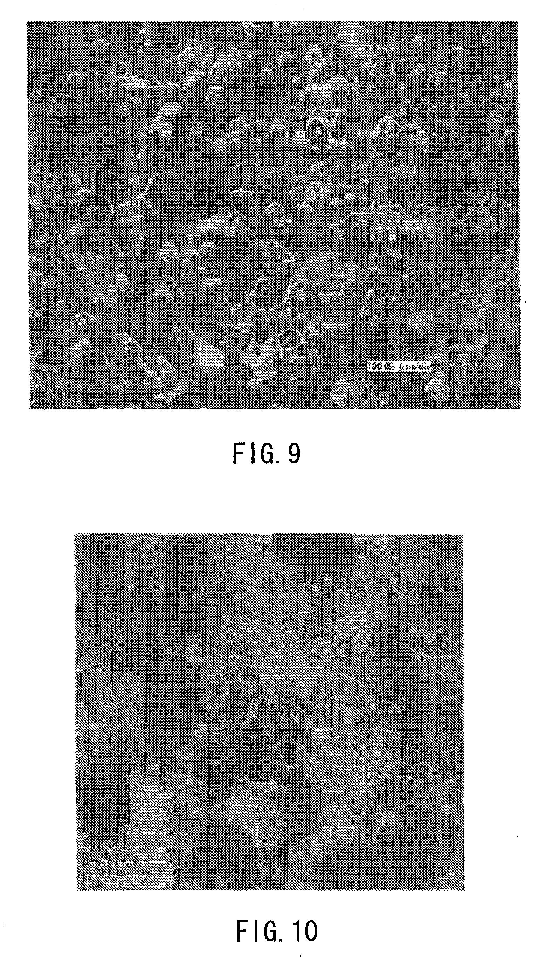

Table 1 below shows the measurement results for the dynamic friction coefficients of the inner and outer faces of this tubular article. FIG. 9 is an observation photograph of the outer face of ×1000 by use of a digital microscope ("VHX-100" produced by Keyence). The white spots on the outer face are the PTFE resin particles, and the parts oozing out in a flowing state around the PTFE resin particles are the FEP resin. As a whole, it can be observed that the fluororesin coating face has a granular pattern due to the fluororesin particles. FIG. 10 is the photograph taken similarly for showing the inner face of this tubular article. The black spots are the oozing PTFE resin, and the whitish parts around the PTFE resin are the part where the FEP resin is melted and flowed.

When this polyimide tubular article was attached as a fixing belt of a laser beam printer as shown in FIG. 6 with an ability to fix 10 sheets per minute and an image fixing was carried out, a preferable image was obtained.

(Comparative Example 1)

A polyimide tubular material was obtained using the same condition as Example 1 except that the fluororesin powder was not mixed in the polyimide precursor solution. Table 1 below shows the measurement result for the dynamic friction coefficients of this tubular article.

(Example 2)

A FEP powder with an average particle diameter of 35 μm ("532-8110" (Trade Name), produced by Dupont) as fluororesin powder was added alone to and mixed in the polyimide precursor solution comprising BPDA/PPD prepared in Example 1 so that the ratio of the FEP powder with respect to the solid contents in the polyimide precursor solution became 23 mass%, whereby a fluororesin mixed polyimide precursor solution was prepared.

Subsequently, the polyimide precursor solution was applied to the surface of the mold as in Example 1, subjected to casting, and subjected to imidization in the same manner as in Example 1. After heating as a final imidization at 250°C for 10 minutes, the temperature was raised to 300°C in 5 minutes. The mold was then heated at 350°C for 15 minutes, and cooled to obtain a polyimide tubular article.

Table 1 shows the measurement result for the dynamic friction coefficients of this tubular article. When this polyimide tubular article was attached as a fixing belt of a laser beam printer as shown in FIG. 6 with an ability to fix 10 sheets per minute and an image fixing was carried out, a preferable image was obtained. In FIG. 6, 31 denotes a fixing belt (polyimide resin tubular article), 32 denotes a belt guide, 33 denotes a ceramic heater, 34 denotes a pressure roller with a drive power source, 35 denotes a thermister, 36 denotes a cored bar of the pressure roller, 37 denotes a copying paper, 38 denotes an unfixed toner image, 39 denotes a fixed toner image, and N denotes a nip point.

(Example 3)

A PFA resin powder as the fluororesin powder with an average particle diameter of 28 μm ("PFAMP102" (Trade Name) produced by DuPont-Mitsui Fluorochemicals) alone was added to the solution containing polyimide precursor comprising BPDA/PPD as prepared in Example 1 to be 24 mass% with respect to the solid contents in the polyimide precursor solution and mixed so as to prepare a fluororesin mixed polyimide precursor solution.

Subsequently, the polyimide precursor solution applied to the mold surface was cast as in Example 1, and treated at 400°C as the maximum temperature for imidization in the same condition as Example 1 so as to obtain a polyimide tubular article. The mold used here had an outer diameter of 30 mm.

Table 1 shows the measurement result for the dynamic friction coefficients of this tubular article. When this polyimide tubular article was attached as a pressure belt of a laser beam printer as shown in FIG. 7 with an ability to fix 6 sheets per minute and an image fixing was carried out, a preferable image was obtained. In FIG. 7, 51 denotes a pressure belt, 52 denotes a press guide, 53 denotes a press pad, 54 denotes a fixing roller, 55 denotes a heat source, 56 denotes an unfixed toner image, and 57 denotes a copying paper.

(Example 4)

75 mass parts of ODA was dissolved in NMP in a flask with respect to 100 mass parts of PMDA (monomer concentration: 18.0 mass%), which were allowed to react at a temperature of 23°C for 6 hours while stirring, whereby a polyimide precursor solution was obtained. The rotational viscosity of this polyimide precursor solution was 1500 poise. Herein, the rotational viscosity was a value measured using a Brookfield viscometer at a temperature of 23°C. Next, a FEP powder with an average particle diameter of 35 μm (melting point: 270°C, produced by Dupont, "532-8110" (Trade Name)) was added alone to the polyimide precursor solution so that the ratio became 26 mass% of the solid contents in the polyimide precursor solution, and mixed so as to prepare a fluororesin mixed polyimide precursor solution.

Subsequently, the polyimide precursor solution was applied on the surface of the mold as in Example 1. Later, it was dried in a 120°C furnace for 60 minutes. The temperature was raised to 200°C in 20 minutes. Then the mold was heated at the same temperature for 20 minutes, and further heated at 250°C for 10 minutes for the final imidization. Then, the temperature was raised to 400°C in 10 minutes for heating at 400°C for 10 minutes. The mold was cooled to obtain a polyimide tubular article.

Table 1 shows the measurement result for the dynamic friction coefficients of this tubular article. When this polyimide tubular article was attached as a fixing belt of a laser beam printer as shown in FIG. 6 with an ability to fix 6 sheets per minute and an image fixing was carried out, a preferable image was obtained.

(Comparative Example 2)

A polyimide tubular article was obtained in the similar condition as in Example 1 except that the final imidization temperature was changed to 250°C. Table 1 shows the measurement result for the dynamic friction coefficients of the inner and outer faces of this tubular article.

The fluororesin mixed polyimide precursor solutions prepared in the above Examples and Comparative Examples were cast on glass plates of 300 mm□ (300 mm long and 300 mm wide) so that the thickness became 80 $\mu$m, and the imidization was completed at the maximum imidization temperatures of Table 1, whereby polyimide films were obtained. After that, the contact angle with pure water of each film was measured. The measured results are shown in Table 1.

(Example 5)

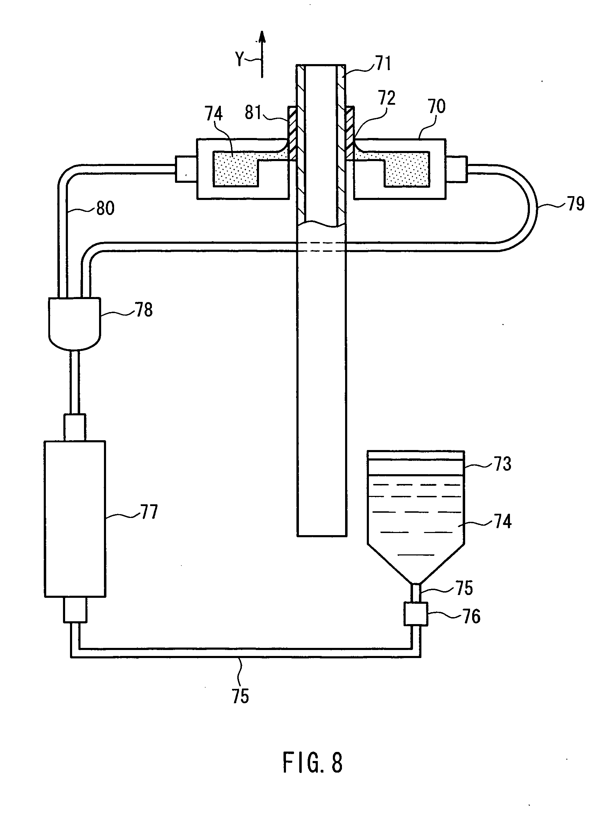

An apparatus for forming a tubular article as shown in FIG. 8 was used. A discharge slit head 70 had a slit 72 for discharging the polyimide precursor, with an inner diameter of 230.2 mm and an opening width of 1.4 mm. This discharge slit head 70 was attached to the apparatus. For a mold 71, an aluminum mold having an outer diameter of 229 mm and a length of 500 mm was prepared. A silicon oxide coating agent was coated on the mold surface by a dipping method and baked, and the mold coated with the silicon oxide film was used and set so that the upper end of the mold was located in the interior of the slit. The average surface roughness (Rz) of the mold was 2.2 $\mu$m.

Next, a PTFE powder with an average particle diameter of 3.0 $\mu$m (melting point: 327°C, produced by Dupont, "Zonyl MP1100" (Trade Name)) was added to the polyimide precursor solution comprising BPDA/PPD prepared in Example 1 so that the ratio of the PTFE powder with respect to the solid contents in the polyimide precursor solution became 23 mass%, and stirred to disperse homogeneously. Subsequently, coarse foreign particles were filtered out using a stainless-steel wire netting of 250 mesh, whereby a PTFE powder mixed polyimide precursor solution was prepared.

Subsequently, 14.5 mass% of acidic carbon black (''MA 78'' (Trade Name) produced by Mitsubishi Chemical Corporation; DBP absorption amount: 70 cm$^3$; volatile matter content per specific surface area of 100 m$^2$/g: 2.6 weight%) was added to the polyimide resin so as to manufacture a polyimide precursor formed by mixing and dispersing the three ingredients, i.e., polyimide, PTFE and carbon black.

Then, the PTFE mixed precursor solution 74 was introduced into a storage tank 73. By rotating a slurry pump 77, a predetermined amount of the polyimide precursor solution was distributed to twenty-four positions through a branched unit 78. Pipes 79 and 80 (other pipes are not shown) were used and connected to a pipe connector of the discharge slit head 70 so as to feed forcibly to the slit opening. At the same time, the mold was raised vertically in the direction pointed with the arrow Y. When a part of the mold 71 (being 50 mm below from the top) passed the slit, the polyimide precursor solution was fed forcibly from the slurry pump 77 so that a polyimide precursor solution 81 was cast to have a thickness of 600 $\mu$m on the outer surface of the mold 71. Numeral 75 denotes a feeding pipe and 76 denotes a valve. The forcible feeding speed of the slurry pump 77 and the rising speed of the mold 71 had been calculated previously through experiments from data such as the viscosity of the polyimide precursor solution, the outer diameter of the mold 71, the liquid molding thickness or the like. When the part 50 mm from the bottom of the mold 71 passed the slit, the forcible feeding from the slurry pump was stopped, and thus the liquid molding on the surface of the mold 71 was completed to have a length of about 400 mm. Subsequently, the mold was placed in a furnace immediately and dried at 120°C for 60 minutes. The temperature was raised to 200°C in 40 minutes, and the mold was held at the same temperature for 20 minutes. Next, the temperature was raised to 300°C in 20 minutes, and the mold was held for 30 minutes. The temperature was raised further to 340°C in 15 minutes, and the mold was heated at the temperature for 20 minutes for completing the imidization. Subsequently the mold was taken out from the furnace, and the polyimide resin tubular article was released from the mold.

The tubular article had a thickness of 57 $\mu$m, and the volume resistivity at an applied voltage of 500 v was 1.1 $\times$ 10$^8$ $\Omega \cdot$ cm. The PTFE resin mixed in the precursor solution was melted and oozed out on the inner and outer faces of the tubular article. According to the data for the dynamic friction coefficient, resin oozed out more on the outer face than on the inner face.

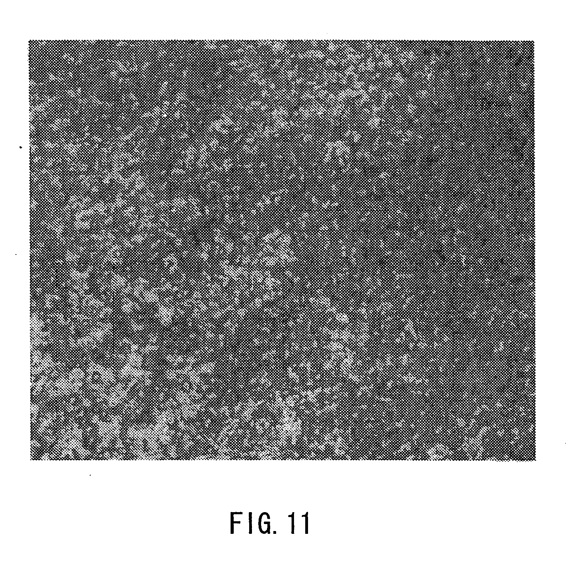

FIG. 11 is an observation photograph showing the outer face x1000 through a digital microscope ("VHX-100" produced by Keyence). The white spots are the PTFE resin particles. It is demonstrated that a granular pattern due to the fluororesin particles are provided.

Table 1 shows the measurement results for the dynamic friction coefficient and the contact angle of the tubular article. This tubular article was used as an intermediate transfer belt of a full-color tandem laser beam printer. After transferring a color toner image formed on the belt surface to a copying paper, toner remaining on the transfer belt was removed with a polyurethane rubber blade. Since the sliding resistance between the blade and the transfer belt surface was low, the remaining toner was removed with certainty. As a result, a vivid image and sufficient permanency were realized. Moreover, since the fluororesin oozed out less on the inner face of the tubular article, the rotation was carried out surely without slipping between the driving rollers arranged on the inner face of the transfer belt. Thereby, the toner image was not distorted, and image blurring was prevented. The volume resistivity was measured in accordance with the method of JIS C2151, by using a digital ultra-high resistance meter /microcurrent meter R8340/R8340A, and at an application time of 30 seconds.

(Example 6)

(1) Manufacturing of first layer (inner layer) of multilayered tubular article

A boron nitride powder mixed polyimide precursor solution was prepared by mixing a boron nitride powder ("MBN-010T" produced by Mitsui Chemicals, Inc.) in a polyimide precursor solution comprising BPDA/PPD prepared in Example 1 so that the content of the boron nitride powder became 30 mass% with respect to the solid concentration in the polyimide precursor solution. Next, the solution was applied on a surface of the mold used in Example 1 and cast by using a ring die so that the coating thickness after the imidization would be 35 $\mu$m. After drying at 120°C, an intermediate treatment for imidization was carried out at 250°C, thereby a first coating layer of a tubular article comprising a polyimide coating mixed with a boron nitride powder was formed.

(2) Manufacturing of polyimide precursor solution used for second layer (outer layer) of multilayered tubular article

A PTFE powder with an average particle diameter of 3.0 $\mu$m (melting point: 327°C, "SP-Powdered PTFE" produced by SUMMIT PRECISION POLYMERS CORPORATION) and carbon fiber ("VGCF-H", produced by Showa Denko) were added to the polyimide precursor solution comprising BPDA/PPD prepared in Example 1, so that the content of the PTFE powder became 70 mass% and the content of the carbon fiber became 5 mass% with respect to the solid contents in the polyimide precursor solution, and stirred to disperse homogeneously. Subsequently, coarse foreign particles were filtered out using a stainless-steel wire netting of 250 mesh, whereby a polyimide precursor solution mixed with a fluororesin powder and carbon fiber was prepared.

(3) Formation of second layer (outer layer) of multilayered tubular article and completion of imidization

On the surface of the first layer tubular article manufactured in the above (1), the polyimide precursor solution mixed with the fluororesin powder and the carbon fiber prepared in the above (2) was cast by using a ring die so that the coating thickness after imidization would be 20 $\mu$m. After drying at a temperature of 120°C, a primary imidization was carried out at 250°C. The temperature was raised further to 400°C in 15 minutes, and the tubular article was heated at the temperature for 20 minutes for completing imidization. In this manner, a two-layered polyimide tubular article having an inner layer of polyimide mixed with a boron nitride powder and an outer layer of polyimide mixed with a fluororesin powder and carbon fiber was obtained. The inner diameter of this tubular article was 24 mm and the total thickness was 54 $\mu$m. The first layer and the second layer were adhered strongly to each other due to the imidization and they were not peeled off. On the outer face of the tubular article, the mixed fluororesin was melted and oozed out, and the excellent releasing property and the low friction property of the fluororesin were provided. Table 1 shows the measurement results of the dynamic friction coefficients of the inner and outer faces of this tubular article. This tubular article was configured by integrating the first layer and the second layer through imidization. The first layer (inner layer) had mechanical characteristics required for a tubular article. On the second layer (outer layer), the large quantity of mixed fluororesin was melted and oozed out to provide a release layer having sufficient thickness and thus excellent durability was provided.

The boron nitride mixed in the first layer and the carbon fiber mixed in the second layer served to improve the thermal conductivity in the thickness direction of the tubular article. The surface resistance of the fluororesin layer oozing out on the outermost layer was 800 $\Omega/\square$. When it was attached as a fixing belt to the laser beam printer as shown in FIG. 6 having an ability to fix 14 sheets per minute and an image fixing was carried out, a preferable image with no offset was obtained.

(Example 7)

(1) Manufacturing of first layer (inner layer) of multilayered tubular article

A dispersion of a polyimide precursor and fluororesin was prepared by mixing 15 mass% of PTFE powder with an average particle diameter of 3.0 $\mu$m (melting point: 327°C; "Zony MP1100" (Trade Name) produced by Dupont) with a polyimide precursor solution comprising BPDA/PPD prepared in Example 1. Next, the solution was applied on a surface of the mold used in Example 3 and cast by using a ring die so that the coating thickness after the imidization would be 35 $\mu$m. After drying at 120°C, an intermediate treatment for imidization was carried out at 250°C, thereby a first coating layer of the mixed solution was formed.

(2) Manufacturing of polyimide precursor solution to be used for second layer (outer layer) of multilayered tubular article

A PTFE powder with an average particle diameter of 3.0 $\mu$m (melting point: 327°C, "SP-Powdered PTFE" produced by SUMMIT PRECISION POLYMERS CORPORATION) and carbon fiber ("VGCF-H" (Trade Name), produced by Showa Denko) were added to the polyimide precursor solution comprising BPDA/PPD prepared in Example 1 so that the content of the PTFE became 55 mass% and the content of the carbon black became 5 mass% with respect to the solid contents in the polyimide precursor solution, and stirred to disperse homogeneously. Subsequently, coarse foreign particles were filtered out using a stainless-steel wire netting of 250 mesh, whereby a polyimide precursor solution mixed with a fluororesin powder and carbon fiber was prepared.

(3) Formation of second layer (outer layer) of multilayered tubular article and completion of imidization

On the surface of the first layer of a tubular article manufactured in the above (1), the polyimide precursor solution mixed with the fluororesin powder and the carbon fiber prepared in the above (2) was cast by using a ring die so that the coating thickness after imidization would be 20 $\mu$m. After drying at a temperature of 120°C, a primary imidization was carried out at 250°C. The temperature was raised further to 400°C in 15 minutes, and the solution was heated at the same temperature for 20 minutes for completing imidization. In this manner, a two-layered polyimide tubular article having an inner layer of polyimide mixed with fluororesin and an outer layer of polyimide mixed with a fluororesin powder and carbon fiber was obtained. The inner diameter of this tubular article was 24 mm and the total thickness was 55 $\mu$m. The first layer and the second layer were adhered strongly to each other due to the imidization. The fluororesin was melted and oozed out on the outer face and inner face of the tubular article, and the excellent releasing property and the low friction property of the fluororesin were provided. Table 1 shows the measurement result of the dynamic friction coefficients of the inner and outer faces of this tubular article. The surface resistance of the fluororesin layer oozing out on the outermost layer of this tubular article was 815 $\Omega/\square$. When the product was used as a pressure belt of a laser beam printer to which the fixing device as shown in FIG. 7 was attached and an image fixing was carried out, a preferable image without offset was obtained.

[Table 1]

|  | Polyimide acidic ingredient / amine ingredient | Fluororesin /melting point (°C) | | Maximum imidization temperature (°C) | Dynamic friction resistance value for outer face (N) | Dynamic friction resistance value for inner face (N) | Contact angle for outer face (°) | Contact angle for inner face (°) |
|---|---|---|---|---|---|---|---|---|
| Ex. 1 | BPDA/PPD | PTFE/ 327°C | FEP/ 260°C | 400 | 0.09 | 0.09 | 108 | 106 |
| Ex. 2 | BPDA/PPD | - | FEP/ 260°C | 350 | 0.08 | 0.11 | 101 | 96 |
| Ex. 3 | BPDA/PPD | - | PFA/ 300°C | 400 | 0.09 | 0.10 | 103 | 105 |

(continued)

| | Polyimide acidic ingredient / amine ingredient | Fluororesin /melting point (°C) | | Maximum imidization temperature (°C) | Dynamic friction resistance value for outer face (N) | Dynamic friction resistance value for inner face (N) | Contact angle for outer face (°) | Contact angle for inner face (°) |
|---|---|---|---|---|---|---|---|---|
| Ex. 4 | PMDA/ODA | - | FEP/ 260°C | 400 | 0.08 | 0.10 | 103 | 100 |
| Ex.5 | BPDA/PPD | PTFE/ 327°C | - | 340 | 0.16 | 0.20 | 98 | 85 |
| Ex.6 | BPDA/PPD | PTFE/ 327°C | - | 400 | 0.08 | 0.38 | 108 | 74 |
| Ex.7 | BPDA/PPD | PTFE/ 327°C | - | 400 | 0.08 | 0.13 | 105 | 95 |
| Com.1 | BPDA/PPD | - | - | 400 | 0.40 | 0.40 | 70 | 70 |
| Com.2 | BPDA/PPD | PTFE/ 327°C | FEP/ 260°C | 250 | 0.38 | 0.40 | 72 | 75 |
| Ex. : Example; Com. : Comparative Example | | | | | | | | |

As shown in Table 1, the tubular article of the present invention had a low dynamic friction coefficient. Similarly, the contact angle of a film product was low. An observation result using an electron micrograph indicated that a fluororesin oozes out on the surface of the polyimide tubular article. When the tubular article was attached as a fixing belt for a laser beam printer so as to carry out an image fixing, a preferable image was obtained.

**Claims**

1. A tubular article formed by molding and thermosetting a mixture comprising polyimide and fluororesin particles, at least a part of the fluororesin particles present in the vicinity of a surface layer of the tubular article is melted and flowed into an outer face or both inner and outer faces of the tubular article and oozes out so as to form a fluororesin coating partially or entirely.

2. The tubular article according to claim 1, wherein the fluororesin coating face has a granular pattern due to the fluororesin particles.

3. The tubular article according to claim 1, wherein the tubular article is a single layer comprising polyimide and fluororesin particles.

4. The tubular article according to claim 1, wherein the tubular article is formed of an inner layer and an outer layer, the inner layer comprises no or less fluororesin particles in the content in comparison with the outer layer, and the outer layer comprises more fluororesin particles in the content in comparison with the inner layer.

5. The tubular article according to claim 1, wherein the content of the fluororesin particles in the layer comprising the polyimide and the fluororesin particles is in a range of 10 to 90 mass%.

6. The tubular article according to claim 1, wherein the fluororesin particles comprise at least one fluororesin selected from the group consisting of polytetrafluoroethylene (PTFE), tetrafluoroethene-perfluoroalkyl vinyl ether copolymer (PFA), polychloro-trifluoroethylene (PCTFE), tetrafluoroethylene-hexafluoropropylene copolymer (FEP), and tetrafluoroethylene-ethylene copolymer (PETFE).

7. The tubular article according to claim 1, wherein the fluororesin particles have an average particle diameter in a range of 0.1 to 100 $\mu$m.

8. The tubular article according to claim 1, wherein the polyimide is formed by heating for imidization of a polyimide precursor solution comprising at least one kind of aromatic tetracarboxylic acid dehydrate and at least one kind of aromatic diamine.

9. A method of manufacturing a tubular article, comprising the steps of

applying, on an outer face of a mold, a solution of a mixture of a polyimide precursor solution and fluororesin particles to be melted and flowed, and casting to have a predetermined thickness;
heating for imidization, setting the maximum temperature for the imidization as a temperature higher than the melting point of the fluororesin,
cooling and subsequently separating the tubular article from the mold, so that at least a part of the fluororesin particles present in the vicinity of the surface layer of the tubular article is melt-flowed and oozes out on the outer face or both inner and outer faces of the tubular article so as to form a fluororesin coating partially or entirely.

10. The method of manufacturing a tubular article according to claim 9, wherein the polyimide precursor solution is applied and cast previously to have a predetermined thickness on the outer face of the mold before application of the dispersion on the outer face of the mold and casting to have a predetermined thickness; and
before the imidization or after completing the imidization, the dispersion is applied on the outer face of the mold and cast to have a predetermined thickness.

11. The method of manufacturing a tubular article according to claim 9, wherein the content of the fluororesin particles in the layer comprising the polyimide and the fluororesin particles is in a range of 10 to 90 mass%.

12. The method of manufacturing a tubular article according to claim 9, wherein the fluororesin particles comprise at least one fluororesin selected from the group consisting of polytetrafluoroethylene (PTFE), tetrafluoroethene-perfluoroalkyl vinyl ether copolymer (PFA), polychloro-trifluoroethylene (PCTFE), tetrafluoroethylene-hexafluoropropylene copolymer (FEP), and tetrafluoroethylene-ethylene copolymer (PETFE).

13. The method of manufacturing a tubular article according to claim 9, wherein the fluororesin particles have an average particle diameter in a range of 0.1 to 100 $\mu$m.

14. The method of manufacturing a tubular article according to claim 9, wherein the polyimide is formed by heating for imidization of a polyimide precursor solution comprising at least one kind of aromatic tetracarboxylic acid dehydrate and at least one kind of aromatic diamine.

15. The method of manufacturing a tubular article according to claim 14, wherein the polyimide is formed by heating for imidization of a polyimide precursor solution comprising biphenyl tetracarboxylic acid dehydrate and para-phenylendiamin.

10

12

11

15

FIG. 1

10

13

12

11

14

15

FIG. 2

FIG. 3

FIG. 4

FIG. 5

FIG. 6

FIG. 7

FIG. 8

FIG. 9

FIG. 10

FIG. 11

FIG. 12

## INTERNATIONAL SEARCH REPORT

| | International application No. |
|---|---|
| | PCT/JP2006/302978 |

| A. CLASSIFICATION OF SUBJECT MATTER |
|---|
| *G03G15/20*(2006.01), *B29C39/10*(2006.01), *B32B1/08*(2006.01), *B32B27/34* (2006.01), *C08J5/00*(2006.01), *C08L27/12*(2006.01), *C08L79/08*(2006.01) |

According to International Patent Classification (IPC) or to both national classification and IPC

| B. FIELDS SEARCHED |
|---|
| Minimum documentation searched (classification system followed by classification symbols) |
| *G03G15/20*(2006.01), *B29C39/10*(2006.01), *B32B1/08*(2006.01), *B32B27/34* (2006.01), *C08J5/00*(2006.01), *C08L27/12*(2006.01), *C08L79/08*(2006.01) |

| Documentation searched other than minimum documentation to the extent that such documents are included in the fields searched |
|---|
| Jitsuyo Shinan Koho      1922-1996    Jitsuyo Shinan Toroku Koho    1996-2006 |
| Kokai Jitsuyo Shinan Koho    1971-2006    Toroku Jitsuyo Shinan Koho    1994-2006 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 6-298952 A (Nitto Denko Corp.), 25 October, 1994 (25.10.94), Full text; Figs. 1 to 2 (Family: none) | 1-15 |
| Y | JP 2000-298411 A (Canon Inc.), 24 October, 2000 (24.10.00), Full text; Figs. 1 to 2 (Family: none) | 1-15 |
| Y | JP 2004-355004 A (Xerox Corp.), 16 December, 2004 (16.12.04), Full text; Figs. 1 to 6 & US 2003/0207078 A1    & EP 1291734 A2 | 4 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 May, 2006 (15.05.06) | 23 May, 2006 (23.05.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**EP 1 852 751 A1**

**REFERENCES CITED IN THE DESCRIPTION**

**Patent documents cited in the description**

- JP H07178741 A
- JP H0325471 A
- JP H06258969 A
- JP H11133776 A
- JP H0623770 A
- JP H01156017 A
- JP 2001341143 A
- JP 2001040102 A
- JP 2001056615 A